(19) Europäisches Patentamt
European Patent Office
Office européen des brevets

(11) EP 1 528 087 B1

(12) EUROPEAN PATENT SPECIFICATION

(45) Date of publication and mention of the grant of the patent:
**21.11.2007 Bulletin 2007/47**

(51) Int Cl.:
***C09D 11/00*** *(2006.01)* ***C03C 17/00*** *(2006.01)*
***B41J 2/01*** *(2006.01)*

(21) Application number: **04011510.7**

(22) Date of filing: **14.05.2004**

(54) **Ink for ink jet recording**

Tinte für Tintenstrahlaufzeichnung

Encre et encre d'impression à jet d'encre

(84) Designated Contracting States:
**DE FR GB**

(30) Priority: **28.10.2003 JP 2003367806**

(43) Date of publication of application:
**04.05.2005 Bulletin 2005/18**

(73) Proprietor: **Toshiba TEC Kabushiki Kaisha**
**Tokyo, 101-8442 (JP)**

(72) Inventors:
- **Hiroki, Masashi**
  **Yokohama-shi,**
  **Kanagawa-ken (JP)**
- **Ushirogochi, Toru**
  **Yokohama-shi,**
  **Kanagawa-ken (JP)**
- **Ohtsu, Kazuhiko**
  **Mishima-shi,**
  **Shizuoka-ken (JP)**
- **Akiyama, Ryozo**
  **Mishima-shi,**
  **Shizuoka-ken (JP)**
- **Ishibashi, Mitsuru**
  **Yokohama-shi,**
  **Kanagawa-ken (JP)**

(74) Representative: **Fuchs**
**Patentanwälte**
**Postfach 46 60**
**65036 Wiesbaden (DE)**

(56) References cited:
**US-A1- 2003 202 079 US-B1- 6 322 892**

- **PATENT ABSTRACTS OF JAPAN vol. 1996, no. 10, 31 October 1996 (1996-10-31) -& JP 08 143806 A (TOAGOSEI CO LTD), 4 June 1996 (1996-06-04)**
- **PATENT ABSTRACTS OF JAPAN vol. 2003, no. 08, 6 August 2003 (2003-08-06) -& JP 2003 119414 A (TOYO INK MFG CO LTD), 23 April 2003 (2003-04-23)**
- **PATENT ABSTRACTS OF JAPAN vol. 2003, no. 12, 5 December 2003 (2003-12-05) -& JP 2003 251798 A (KONICA CORP), 9 September 2003 (2003-09-09)**
- **PATENT ABSTRACTS OF JAPAN vol. 2000, no. 25, 12 April 2001 (2001-04-12) -& JP 2001 220526 A (BROTHER IND LTD), 14 August 2001 (2001-08-14)**
- **CRIVELLO J V ET AL: "Synthesis and Photoactivity of Novel 5-Arylthianthrenium Salt Cationic Photoinitiators" JOURNAL OF POLYMER SCIENCE. PART A, POLYMER CHEMISTRY, WILEY, NEW YORK, NY, US, vol. 40, 2002, pages 3465-3480, XP002334798 ISSN: 0887-624X**
- **JANG M ET AL: "Synthesis and cationic Photopolimerization of Epoxy-Functional Siloxane Monomers and Oligomers" JOURNAL OF POLYMER SCIENCE - PART A - POLYMER CHEMISTRY, WILEY, NEW YORK, NY, US, vol. 41, , pages 3056-3073, XP002334799 ISSN: 0887-624X**

EP 1 528 087 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to an ink for ink jet recording.

In a situation where a fairly large number of copies of printed matter are required such as in the cases of printing copies of local advertisement bill and enterprise handout, a printing machine utilizing a form plate has been conventionally employed for meeting such requirements. In recent years however, an on-demand printer which is capable of quickly coping with the diversification of needs and of minimizing stocks has been increasingly utilized in place of the aforementioned conventional printing machine. As for such an on-demand printer, an ink jet printer is expected to be useful as the ink jet printer is capable of achieving high-speed and high-quality printing.

As for the technique to achieve the printing of highly brilliant images by using the ink jet printer, there is known a method of employing a solvent type ink or a solvent type liquid toner both containing a pigment and an organic solvent in the same manner as in the case of a printing machine utilizing a form plate. This technique however leads to the volatilization of organic solvent to such an extent that cannot be disregarded when the printing is repeated a certain number of times. Therefore, when this technique is employed, a problem of environmental contamination due to this volatilized organic solvent will be raised, thus necessitating the provision of an exhaust gas processing installation or a solvent recovery system.

Under the circumstances, a photosensitive ink as well as a printer system employing the photosensitive ink are now taken notice of as a technique which is effective in overcoming the aforementioned problem originating from the employment of organic solvents. In this technique, a photosensitive ink comprising, as indispensable components, a radical polymeric monomer, a photopolymerization initiator and a pigment is employed, wherein the photosensitive ink is discharged onto the surface of printing matter so as to be quickly photo-cured.

Since an ink layer formed of such a photosensitive ink can be readily nonfluidized by the irradiation of light, it is possible, with the employment of this printing system, to obtain a printed matter of relatively high-quality. However, the ink employed therein contains a large quantity of carcinogen such as a radical-generating agent, and moreover, a volatile acrylic derivative to be employed as a radical polymeric monomer is highly skin-irritating and stinking. Namely, this conventional photosensitive ink is required to be treated carefully. Further, the radical polymerization in the ink is obstructed greatly by the presence of oxygen in the air atmosphere and at the same time, the exposure light is absorbed by the pigment included in the ink. Therefore, the dosage of exposure tends to become insufficient at a deep region of the layer of ink. As a result, the sensitivity of this photosensitive ink to the exposure light is relatively low so that a considerably sophisticated exposure system would be required in order to obtain a printed matter of high quality in the employment of this printer system.

With a view to overcoming these problems, there has been proposed a cationic curing type ink which cures through the irradiation of active energy beam such as ultra-violet rays or electron beam. In particular, when an oxetane ring-containing compound is employed as a primary agent of the ink jet recording ink, it is possible to obtain a cationic curing type ink which is excellent in curing properties.

A number of such and similar formulations is already known.

JP 08-143806 A shows an ink composition with an oxethane compound that may contain polysiloxi-groups. It seems that this ink is destined for printing onto tins but is not usable as ink-jet ink. JP 2003-119414 A shows an ink-jet ink containing special oxirane-and oxethane-group containing solvents. JP 2003-251798 A describes an ink-jet ink containing an oxethane compound and an epoxi- or vinylether-compound as photopolymerizable substances. JP 2001-220526 A also shows an ink-jet ink with a curable composition containing an oxirane-group containing compound, a vinylether-group containing compound and an oxethane compound having a hydroxi-group. US 6,322,892 B1 shows a coating especially for the outer coating of tins and the like. It contains modified silicone oil as lubricant to avoid damage of the coating by friction during transport of the cans through the production line. It is not an ink-jet ink. Crivello et al. "Synthesis and Photoactivity of Novel 5-Arylthianthrenium Salt Cationic Photoinitiators", J. Polym. Sci. Part A: Polym. Chem. 2002, vol. 40, p. 3465 - 3480 and Jang and Crivello "Synthesis and Cationic Photopolymerization of Epoxi-Functional Monomers and Oligomers", J. Polym. Sci. Part A: Polym. Chem. 2003, vol. 41, p. 3056 - 3073 show scientific reports on acid generating substances and on polymerization of epoxi-functional siloxane compounds. They do not directly contribute to the formulation of ink-jet inks. US 2003/0202079 A1 was published within the priority year of this patent. It shows an ink-jet image forming method with an ink containing an oxirane compound, a vinylether compound and an epoxi compound.

However, there is a problem common to photo cationic curing type ink for ink jet that the viscosity of the ink is caused to increase during the storage thereof, so that it is impossible to secure stabilized discharging of ink. The photo cationic curing type ink is employed in such a manner that it is discharged from an ink jet print head for instance so as to form a pattern of ink layer corresponding to a desired image on the surface of a recording medium and then, the resultant ink layer is subjected to irradiation by ultraviolet rays or an electron beam to cure the ink layer to obtain the image. The image to be obtained in this manner is insufficient in solvent resistance and hence can be easily dissolved by alcohol or acetone, thereby raising another problem in the employment of the photo cationic curing type ink.

Therefore, one of the objects of the present invention is to provide an ink for ink jet recording, which is low in viscosity and excellent in storage stability as well as in curability, and at the same time, is capable of forming an image excellent in solvent resistance.

According to one aspect of the present invention, there is provided an ink for ink jet recording comprising:

a photo-acid generating agent which is capable of generating an acid as it is irradiated with light;

a colorant; and

an acid-polymerizable solvent which can be polymerized in the presence of an acid;

wherein a content of the photo-acid generating agent is not less than 2.5 parts by weight per 100 parts by weight of the acid-polymerizable solvent; and the acid-polymerizable solvent comprises neopentyl glycol diglycidyl ether.

According to another aspect of the present invention, there is provided an ink for ink jet recording comprising:

a photo-acid generating agent which is capable of generating an acid as it is irradiated with light;

a colorant; and

an acid-polymerizable solvent which can be polymerized in the presence of an acid;

wherein a content of the photo-acid generating agent is not less than 2.5 parts by weight per 100 parts by weight of the acid-polymerizable solvent; and the acid-polymerizable solvent comprises neopentyl glycol diglycidyl ether and an oxetane ring-containing compound represented by the following chemical formula (2):

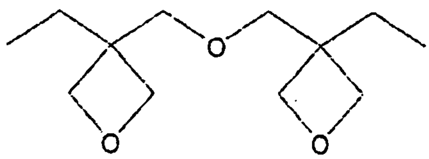

(2)

According to another aspect of the present invention, there is provided an ink for ink jet recording comprising:

a photo-acid generating agent which is capable of generating an acid as it is irradiated with light;

a colorant; and

an acid-polymerizable solvent which can be polymerized in the presence of an acid;

wherein a content of the photo-acid generating agent is not less than 2.5 parts by weight per 100 parts by weight of the acid-polymerizable solvent; and the acid-polymerizable solvent comprises 70% by weight to 90% by weight of neopentyl glycol diglycidyl ether and 10% by weight to 30% by weight of an oxetane ring-containing compound represented by the following chemical formula (3):

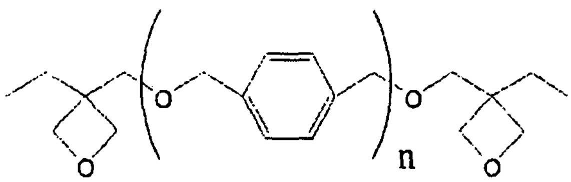

(3)

This summary of the invention does not necessarily describe all necessary features so that the invention may also be a sub-combination of these described features.

Next, various embodiments of the present invention will be explained in detail as follows.

In the ink for ink jet recording according to the embodiments of the present invention, the kinds of photo-acid generating agent which are capable of generating acid as they are irradiated with light include onium salt, diazonium salt, quinone diazide compounds, organic halide compounds, aromatic sulfonate compounds, bisulfone compounds, sulfonyl compounds, sulfonate compounds, sulfonium compounds, sulfamide compounds, iodonium compounds, sulfonyl diazomethane compounds and mixtures of these compounds.

Specific examples of the aforementioned compounds include triphenylsulfonium triflate, diphenyliodonium triflate, 2,3,4,4-tetrahydroxybenzophenone-4-naphthoquinone diazide sulfonate, 4-N-phenylaiaino-2- methoxyphenyl diazonium sulfate, 4-N-phenylamino-2-methoxyphenyldiazonium-p-ethylphenyl sulfate, 4-N-phenylamino-2-methoxyphenyldiazonium-2-naphthyl sulfate, 4-N-phenylamino-2-methoxyphenyldiazoniumphenyl sulfate, 2,5-diethoxy-4-N-4'-methoxyphenylcarbonylphenyldiazonium-3-carboxy-4-hydroxyphenyl sulfate, 2-methoxy-4-N-phenylphenyldiazonium-3-carboxy-4-hydroxyphenyl sulfate, diphenylsulfonyl methane, diphenylsulfonyl diazomethane, diphenyl disulfone, α-methylbenzoin tosylate, pyrogallo trimesylate, benzoin tosylate, MPI-103 (CAS.NO.[87709-41-9]; Midori Kagaku Co., Ltd.), BDS-105 (CAS.NO.[145612-66-4]; Midori Kagaku Co., Ltd.), NDS-103 (CAS.NO.[110098-97-0]; Midori Kagaku Co., Ltd.), MDS-203 (CAS.NO.[127855-15-5]; Midori Kagaku Co., Ltd.), Pyrogallo tritosylate (CAS.NO.[20032-64-8]; Midori Kagaku Co., Ltd.), DTS-102 (CAS.NO.[75482-18-7]; Midori Kagaku Co., Ltd.), DTS-103 (CAS.NO.[71449-78-0]; Midori Kagaku Co., Ltd.), MDS-103 (CAS.NO.[127279-74-7]; Midori Kagaku Co., Ltd.), MDS-105 (CAS.NO.[116808-67-4]; Midori Kagaku Co., Ltd.), MDS-205 (CAS.NO.[81416-37-7]; Midori Kagaku Co., Ltd.), BMS-105 (CAS.NO.[149934-68-9]; Midori Kagaku Co., Ltd.), TMS-105 (CAS.NO.[127820-38-6]; Midori Kagaku Co., Ltd.), NB-101 (CAS.NO.[20444-09-1]; Midori Kagaku Co., Ltd.), NB-201 (CAS.NO.[4450-68-4]; Midori Kagaku Co., Ltd.), DNB-101 (CAS.NO.[114719-51-6]; Midori Kagaku Co., Ltd.), DNB-102 (CAS.NO.[131509-55-2]; Midori Kagaku Co., Ltd.), DNB-103 (CAS.NO.[132898-35-2]; Midori Kagaku Co., Ltd.), DNB-104 (CAS.NO.[132898-36-3]; Midori Kagaku Co., Ltd.), DNB-105 (CAS.NO.[132898-37-4]; Midori Kagaku Co., Ltd.), DAM-101 (CAS.NO.[1886-74-4]; Midori Kagaku Co., Ltd.), DAM-102 (CAS.NO.[28343-24-0]; Midori Kagaku Co., Ltd.), DAM-103 (CAS.NO.[14159-45-6]; Midori Kagaku Co., Ltd.), DAM-104 (CAS.NO.[130290-80-1] and CAS.NO.[130290-82-3]; Midori Kagaku Co., Ltd.), DAM-201 (CAS.NO.[28322-50-1]; Midori Kagaku Co., Ltd.), CMS-105 (Midori Kagaku Co., Ltd.), DAM-301 (CAS.NO.[138529-81-4]; Midori Kagaku Co., Ltd.), SI-105 (CAS.NO.[34694-40-7]; Midori Kagaku Co., Ltd.), NDI-105 (CAS.NO.[133710-62-0]; Midori Kagaku Co., Ltd.); EPI-105 (CAS.NO.[135133-12-9]; Midori Kagaku Co., Ltd.); and UVACURE1591(DAICEL UCB Co., Ltd.).

It is preferable to employ onium salts as a photo-acid generating agents, examples of onium salts useful in this case including diazonium salts, phosphonium salts and sulfonium salts having, as a counter ion, fluoroboric acid anion, hexafluoroantimonic acid anion, hexafluoroarsenic acid anion, trifluoromethane sulfonate anion, paratoluene sulfonate anion,or paranitrotoluene sulfonate anion. In particular, it is preferable that the photo-acid generating agent comprises onium salts represented by the following general formulas (4) and (5) or triazine halide compounds. These photo-acid generating agents are advantageous in terms of both sensitivity and stability.

```
R6-C1⁺-R7
   |          nA4⁻                 ··· (4)
   R8
```

R9-C2$^+$-R10 mA5$^-$ (5)

wherein R6, R7, R8, R9 and R10 individually represent either aromatic group or functional group having a chalcogenide atom and an aromatic group; C1 and C2 individually represents an aromatic group and a chalcogenide atom; A4 and A5 individually represents anion species selected from the group consisting of $PF_6^-$, $SbF_6^-$, $BF_4^-$, $AsF_6^-$, $CF_3SO_3^-$, $C_4F_9SO_3^-$ and $CH_3SO_3^-$; and m and n individually represents an integer. Incidentally, the term "chalcogenide atom" means a chalcogen atom and other atoms which are more positive than the chalcogen atoms. Further, "chalcogen atom" means to include sulfur, selenium, tellurium, polonium and iodine atoms.

The onium salts represented by the aforementioned general formulas (4) and (5) are high in curing reactivity and excellent in stability at the ordinary temperature. Therefore, the onium salts are capable of suppressing the curing of recording ink under the conditions where light is not irradiated thereto.

When the compounds represented by the aforementioned general formulas (4) and (5) are to be employed as a photo-acid generating agent, the aforementioned chalcogenide atom should preferably be selected from sulfur atom and iodine atom in view of securing the thermal stability of the agent and the stability thereof to water. In this case, the anion species should preferably be formed of a non-organic acid, in particular, formed of $PF_6^-$ in view of securing suitable acidity and thermal stability. Further, it is especially preferable to employ hexafluorophosphate compounds having a phenylsulfonium skeleton in view of improving the photosensitivity of the photo-acid generating agent.

The photo-acid generating agent may further contain, if required, a sensitizing dye. Examples of such a sensitizing dye include acridine compounds, benzofuravins, perylene, anthracene and laser dyes.

When quinine diazide compounds are to be employed as a photo-acid generating agent, it is possible to employ salts thereof such as naphthoquinone diazide sulfonyl chloride and naphthoquinone diazide sulfonate.

Organic halides that can be employed as a photo-acid generating agent mean compounds which are capable of forming hydroacid halides. Examples of such halides are set forth for example in US Patent No.3515552; No.3536489; and No.3779778; and in German Patent Laid-Open Publication No.2243621. Specifically, US Patent No.3515552 describes carbon tetrabromide, tetra(bromomethyl) methane, tetrabromoethylene, 1,2,3,4-tetrabromobutane, trichloroethoxy ethanol, p-iodophenol, p-bromophenol, p-iodobiphenyl, 2,6-dibromophenol, 1-bromo-2-naphthol, p-bromoaniline, hexachloro-p-xylene, trichloroacetoanilide, p-bromodimethyl aniline, tetrachlorotetrahydronaphthalene, α,α'-dibromoxylene, α,α,α',α'-tetrabromoxylene, hexabromoethane, 1-chloroanthraquinone, ω,ω,ω-tribromoquinalizine, hexabromocyclohexane, 9-bromofluorene, bis(pentachloro) cyclopentadiphenyl, polyvinylidene chloride and 2,4,6-trichlorophenoxyethyl vinylether. US Patent No.3779778 describes hexabromoethane, α,α,α-trichloroacetophenone, tribromotrichloroethane and halomethyl-S-triazine. Among them, halomethyl-S-triazine such as 2,4-bis(trichloromethyl)-6-methyl-S-triazine and 2,4,6-tris(trichloromethyl)-S-triazine are preferable. More preferable examples of the organic halide compound include those which are substituted by vinylhalomethyl-S-triazine, which is disclosed in US Patent No. 3987037. This vinylhalomethyl-S-triazine compound is a photo-decomposable S-triazine having at least one trihalomethyl group and a group which is conjugated through at least one ethylenically unsaturated bond with triazine ring.

Additionally, it is also possible to suitably employ, as a photo-acid generating agent, a compound having triazine ring having a vinylhalomethyl-S-triazine compound or trihalomethane introduced into the skeleton thereof. If this triazine ring is provided with as many as four or more conjugated double bonds, the photosensitive wavelength of the photo-acid generating agent would be shifted to the larger wavelength side. Therefore, if an ordinary highpressure mercury lamp is to be employed as a light source, the employment of such a compound would be preferable. Specific examples of such a compound include triazine having naphthalene substituent group and condensed triazine compounds.

Further, it is possible to suitably employ acid esters having photodissociating property as a photo-acid generating agent. Specific examples of such esters include orthonitrobenzyl ester of alumi-silanol.

The mixing ratio of the photo-acid generating agent in the recording ink may be suitably selected depending on the acid generating efficiency of the photo-acid generating agent as well as on the quantity of the color component. For example, when the concentration of the color component in the recording ink is about 5% by weight, the mixing ratio of the photo-acid generating agent may be confined generally within the range of 1 to 20 parts by weight, more preferably 5 to 14 parts by weight per 100 parts by weight of the acid-polymerizable solvent included in the ink jet recording ink. If the mixing ratio of the photo-acid generating agent is less than 1 part by weight per 100 parts by weight of the total quantity of solid matters included in the ink jet recording ink, the sensitivity of the ink jet recording ink would be degraded. On the other hand, if the mixing ratio of the photo-acid generating agent exceeds over 20 parts by weight, increase in viscosity with time of the ink would be intensified thereby deteriorating the coating properties of the ink and lowering the hardness of the ink film that has been photo-cured.

As for the pigments useful as a color component in this case, there is not any particular limitation as long as they have optical coloring and tinting properties demanded of pigments. The pigments to be employed in this case may be further provided with other properties such as magnetism, fluorescence, conductivity, dielectric property, etc. in addition to the coloring and tinting properties. If the pigments are provided with these various properties, it may become possible to obtain an image having various functions. Further, the pigments may contain powder effective in providing an ink layer with increased heat resistance or physical strength.

As for the examples of pigments useful in this case, they include photoabsorption pigments for example. Specific examples of such photoabsorption pigments include carbonaceous pigment such as carbon black, carbon refined and carbon nanotube; metal oxide pigments such as iron black, cobalt blue, zinc oxide, titanium oxide, chromium oxide and iron oxide; sulfide pigments such as zinc sulfide; phthalocyanine pigments; pigments formed of salts such as metal sulfate, metal carbonate, metal silicate and metal phosphate; and pigments formed of metal powder such as aluminum powder, bronze powder and zinc powder.

Further, as for the examples of the pigments, they include, for example, dye chelate (basic dye type chelate, acidic dye type chelate, etc.); nitro pigments; aniline black; nitroso pigments (including naphtol green B); azo pigments (including azo lake, insoluble azo pigment, condensed azo pigment, chelate azo pigment) such as Bordeaux 10B, Lake red 4R and chromophthal red; Lake pigments such as Peacock blue lake and Rhodamine lake; phthalocyanine pigments such as phthalocyanine blue; polycyclic pigments (such as perylene pigment, perinone pigment, anthraquinone pigment, quinacridone pigment, dioxane pigment, thioindigo pigment, isoindolinone pigment, quinophthalene pigment, etc.); threne pigments such as thioindigo red and indanthrone blue; quinacridine pigment; and organic pigments such as isoindolinone pigment.

As for the pigments that can be employed in a black ink, examples thereof include carbon black such as Raven 5750, Raven 5250, Raven 5000, Raven 3500, Raven 1255 and Raven 700 (Colombia Co., Ltd.); Regal 400R, Regal 330R, Regal 660R, Mogul L, Monarch 700, Monarch 800, Monarch 880, Monarch 900, Monarch 1000, Monarch 1100,

Monarch 1300 and Monarch 1400 (Cabot Co., Ltd.); No.2300, No.900, MCF88, No.33, No.40, No.45, No.52, MA7, MA8, MA100 and No.2200B (Mitsubishi Chemical Co., Ltd.); Color Black FW1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A, Special Black 4 (Dexa Co., Ltd.).

As for the pigments that can be employed in a yellow ink, examples thereof include Yellow 128, C.I. Pigment Yellow 129, C.I. Pigment Yellow 151, C.I. Pigment Yellow 154, C.I. Pigment Yellow 1, C.I. Pigment Yellow 2, C.I. Pigment Yellow 3, C.I. Pigment Yellow 12, C.I. Pigment Yellow 13, C.I. Pigment Yellow 14C, C.I. Pigment Yellow 16, C.I. Pigment Yellow 17, C.I. Pigment Yellow 73, C.I. Pigment Yellow 74, C.I. Pigment Yellow 75, C.I. Pigment Yellow 83, C.I. Pigment Yellow 93, C.I. Pigment Yellow 95, C.I. Pigment Yellow 97, C.I. Pigment Yellow 98, C.I. Pigment Yellow 114 and C.I. Pigment Yellow.

As for the pigments that can be employed in a magenta ink, examples thereof include C.I. Pigment Red 123, C.I. Pigment Red 168, C.I. Pigment Red 184, C.I. Pigment Red 202, C.I. Pigment Red 5, C.I. Pigment Red 7, C.I. Pigment Red 12, C.I. Pigment Red 48(Ca), C.I. Pigment Red 48(Mn), C.I. Pigment Red 57(Ca), C.I. Pigment Red 57:1, and C.I. Pigment Red 112.

Further, as for the pigments that can be employed in a cyanine ink, examples thereof include C.I. Pigment Blue 15:3, C.I. Pigment Blue 15:34, C.I. Pigment Blue 16, C.I. Pigment Blue 22, C.I. Pigment Blue 60, C.I. Pigment Blue 1, C.I. Pigment Blue 2, C.I. Pigment Blue 3, C.I. Vat Blue 4, and C.I. Vat Blue 60.

Further, it is also possible to employ white pigments such as natural clay, metal carbonates such as white lead, zinc white and magnesium carbonate; metal oxides such as barium and titanium. The recording ink containing white pigments can be employed not only in white printing but also in the amendments of printing or underlying images through overwriting.

As for fluorescent pigments, it is possible to employ either inorganic fluorescence materials but also organic fluorescence materials. As for the inorganic fluorescence materials, specific examples of which include $MgWO_4$, $CaWO_4$, $(Ca,Zn)(PO_4)_2:Ti^+$, $Ba_2P_2O_7:Ti$, $BaSi_2O_5:Pb^{2+}$, $Sr_2P_2O_7:Sn^{2+}$, $SrFB_2O_{3.5}:Eu^{2+}$, $MgAl_{16}O_{27}:Eu^{2+}$, and inorganic acid salts such as tungstenate and sulfate. As for the organic fluorescence materials, specific examples of which include acridine orange, amino acridine, quinacrine, anilinonaphthalene sulfonate derivatives, anthroyl oxystearic acid, auramine O, chlorotetracycline, cyanine dye such as merocyanine and 1,1'-dihexyl-2,2'-oxacarbocyanine, dansyl sulfonamide, dansyl choline, dansyl galactoside, dansyl tolidine, dansyl chloride derivatives such as dansyl chloride, diphenyl hexatriene, eosin, ε-adenosine, ethidium bromide, fluorescein, foamycine, 4-benzoylamide-4'-aminostilbene-2,2'-sulfonic acid, β-naphthyl triphosphic acid, oxonol dye, parinaric acid derivatives, perylene, N-phenylnaphthyl amine, pyrene, safranine O, fluorescamine, fluorescein isocyanate, 7chloronitrobenzo-2-oxa-1,3-diazole, dansylaziridine, 5-(iodoacetamide ethyl) aminonaphthalene-1-sulfonic acid, 5-iodofluorescein, N-(1-anilinonaphthyl 4) maleimide, N-(7-dimethyl-4-methylcumanyl) maleimide, N-(3-pyrene) maleimide, eosin-5-iodoacetamide, fluorescein mercury acetate, 2-[4'-(2''-iodoacetamide)]aminonaphthalene-6-sulfonic acid, eosin, Rhodamine derivatives, organic EL dye, organic EL polymer, organic EL crystal and dendrimer.

As for the powder for enhancing the heat resistance and physical strength of ink layer, examples of which include oxides or nitrides of aluminum and silicon, filler and silicon carbide. For the purpose of providing the ink layer with electric conductivity, the ink may further contain conductive carbon pigment, carbon fiber, or powder of copper, silver, antimony and other noble metals. Iron oxide powder and ferromagnetic powder are suited for providing the ink layer with magnetic property. It is also possible to incorporate metal oxide powder such as tantalum oxide or titanium oxide exhibiting high dielectric constant into the recording ink.

It is also possible to incorporate dyes as an auxiliary component of pigment into the ink. For example, dyes which are low in acidity and basicity and excellent in solubility to epoxy, such as azoic dye, sulfur (building materials) dye, disperse dye, fluorescent brightening agent and oil soluble dye can be employed in general. Among them, it is more preferable to employ oil soluble dye such as azo dye, triaryl methane dye, anthraquinone dye and azine dye. Specific examples of such oil soluble dye include C.I. Slovent Yellow-2, 6, 14, 15, 16, 19, 21, 33, 56, 61 and 80; Diaresin Yellow-A, F, GRN and GG; C.I. Slovent Violet-8, 13, 14, 21 and 27; C.I. Disperse Violet-1; Sumiplast Violet RR; C.I. Slovent Blue-2, 11, 12, 25 and 35; Diresin Blue-J, A, K and N; Orient Oil Blue-IIN, #603; and Sumiplast Blue BG.

These pigments and dyes describe above may be employed singly or in combination of two or more. For the purpose of enhancing the photoabsorbance, saturation and color vision, these pigments and dyes may be employed jointly. Further, in order to enhance the dispersibility of pigments, the pigments may be subjected to treatments for combining them with a polymer binder or for micro-capsulation.

The content of the colorant components in the ink according to the embodiments of the present invention should preferably be confined within the range of 1 to 25% by weight. If the content of the colorant components is less than 1% by weight, the color density would become too low. On the other hand, if the content of the colorant components is higher than 25% by weight, the discharging property of the ink would be deteriorated.

The average particle diameter of the colorant components such as pigments and of the powder components should be as small as possible. Generally, an average particle diameter of the colorant components such as pigments

and of the powder components may be confined to not larger than 1/3, more preferably not larger than about 1/10 of the diameter of the opening of nozzle through which the recording ink is discharged. Incidentally, the diameter of the opening of nozzle is typically not larger than 10μm, more preferably not larger than 5μm. Therefore, a preferable particle diameter of the colorant components and of the powder components should be not larger than 0.35 μm if they are to be employed in printing ink.

For the purpose of enhancing the dispersibility of pigments, etc., the ink for ink jet recording according to the embodiments of the present invention may contain a small quantity of dispersing agents such as nonionic or ionic surfactants and antistatic agents. Further, it is also possible to suitably employ polymer type dispersing agents such as acryl and vinyl alcohol having characteristics similar to the aforementioned surfactants. However, if it is desired to employ a cationic dispersant as a dispersing agent, it is advisable to select those having a lower acidity than that of carboxylic acids. Because, some of cationic dispersants may promote the dark reaction to cure the ink. Further, since dispersants and dyes which are strong in basicity also act not only to deteriorate the sensitivity of the ink but also to promote the dark reaction to cure the ink, these dispersants and dyes should be selected from compounds which are close to neutral or nonionic in nature.

As for the solvent which is polymerizable in the presence of an acid, it is possible to employ compounds having a viscosity of 30 mPa·s or less under the conditions of ordinary temperature and atmospheric pressure and having a boiling point of 150°C or more, more preferably, having a boiling point of 180°C or more.

According to the embodiments of the present invention, the acid polymerizable solvents should contain specific aliphatic epoxide compounds and oxetane compounds. When the acid polymerizable solvents contains neopentyl glycol diglycidyl ether, the viscosity of the ink for ink jet recording can be lowered and the shelf life of the ink can be enhanced.

It is possible, through the incorporation of neopentyl glycol diglycidyl ether, to greatly enhance the stability and curability of the ink. The content of the neopentyl glycol diglycidyl ether in the acid polymerizable solvents can be suitably determined depending on the kinds of the oxetane ring-containing compounds to be discussed hereinafter.

On the other hand, the oxetane ring-containing compounds are capable of promoting and accelerating the curing of ink, so that it is possible to accelerate the curing of ink layer. Accordingly, the effects of oxetane ring-containing compounds would become especially prominent in a situation where high speed printing of several tens meters per minute is demanded.

Specific examples of the oxetane ring-containing compounds include 1,4-bis[(1-ethyl-3 oxetanyl)methoxy] benzene, 1,3-bis[(1-ethyl-3 oxetanyl)methoxy] benzene, 4,4'-bis[(3-ethyl-3 oxetanyl)methoxy] biphenyl, phenol novolac oxetane, oxetanyl silsesquioxane, Allonoxetane OXT-101 and OXT-102 (Toa Gosei Co., Ltd.), 1,4-bis[(1-ethyl-3-oxetanyl) methoxy] cyclohexane, 1,4-bis[(3-ethyl-3-oxetanyl)methoxy] cyclohexane, 1,2-bis[(1-ethyl-3-oxetanyl)methoxy] norbornane, aliphatic or alicyclic compounds having at least two oxetane groups, and acrylic or methacrylic compounds having oxetane group on their side chains.

In particular, di[1-ethyl(3-oxetanyl)] methylether (DOX) which can be represented by the following chemical formula (2) is excellent in curing properties and low in viscosity and hence is preferable for use.

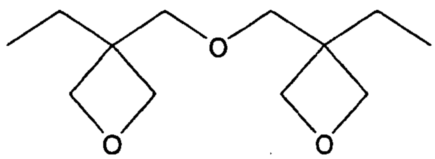

(2)

When the aliphatic epoxide compounds represented by the aforementioned general formula (1) are employed in combination with the oxetane ring-containing compound (DOX) represented by the aforementioned chemical formula (2), the content of the epoxide compounds should preferably be confined within the range of 20% by weight to 80% by weight based on the total weight of the acid polymerizable solvent. If the content of the epoxide compounds falls outside this range, the resultant ink may be degraded in terms of solvent resistance, curability and storage stability. Taking the solvent resistance thereof into consideration, the content of the neopentyl glycol diglycidyl ether should preferably be confined within the range of 25% by weight to 75% by weight based on the total weight of the acid polymerizable solvent.

Further, 1,4-bis([(3-ethyl-3-oxetanyl)methoxy]methyl} benzene (XDO) which can be represented by the following chemical formula (3) can be preferably employed as this XDO is capable of enhancing hardness and solvent resistance.

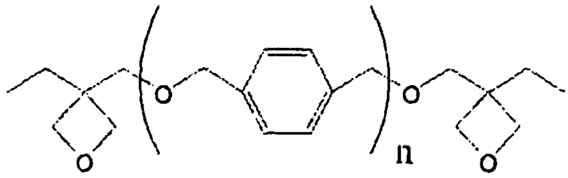

(3)

(wherein n represents an integer ranging from 1 to 3).

When the aliphatic epoxide compound neopentyl glycol diglycidyl ether is employed in combination with the oxetane ring-containing compound (XDO) represented by the aforementioned chemical formula (3), the content of the epoxide compounds should preferably be confined within the range of 70% by weight to 90% by weight based on the total weight of the acid polymerizable solvent. If the content of the epoxide compounds falls outside this range, the resultant ink may be degraded in terms of solvent resistance and curability, and may become too viscous to enable the ink to be easily discharged from the ink jet head.

The total quantity of the neopentyl glycol diglycidyl ether and the oxetane ring-containing compound should preferably be not less than 90% by weight based on the total weight of the acid polymerizable solvent. If the total quantity of these compounds is less than 90% by weight based on the total weight of the acid polymerizable solvent, the resultant ink may be deteriorated in terms of solvent resistance, viscosity and photosensitivity.

It is also possible to use these two kinds of oxetane ring-containing compounds (DOX) and (XDO) in combination. In this case, the content of the oxetane ring-containing compound represented by the aforementioned chemical formula (2) should preferably be confined within the range of 20% by weight to 80% by weight based on the total weight of the acid polymerizable solvent, while the content of the oxetane ring-containing compound represented by the aforementioned chemical formula (3) should preferably be confined within the range of 10% by weight to 30% by weight based on the total weight of the acid polymerizable solvent. If the content of these epoxide compounds falls outside these ranges, the resultant ink may be degraded in terms of solvent resistance and curability, and may become too viscous to enable the ink to be easily discharged from the ink jet head.

As long as the quantity to be added is confined within 10% by weight based on the total weight of the acid polymerizable solvent, a highly viscous compound may be incorporated, as part of solvent, into the acid polymerizable solvent. For example, a compound which is relatively high in molecular weight and solid at the ordinary temperature may be incorporated into the acid polymerizable solvent. When such a compound is additionally included in the acid polymerizable solvent in addition to the aforementioned neopentyl glycol diglycidyl ether and oxetane ring-containing compound, the flexibility of the ink layer after the curing thereof or the dispersibility of pigments can be enhanced. Further, when a compound which is large in valency and highly reactive is employed as such a compound, it is possible to obtain a cured product which is enhanced in hardness as well as in solvent resistance.

Specific preferable examples of such a compound include those having a molecular weight of not more than 5000 and a cyclic ether group such as epoxy group, oxetane group, oxolane group which is bonded thereto through a long chain alkylene group; acrylic or vinyl compounds having any of the aforementioned substituent groups on their side chains; carbonate-based compounds; low molecular melanin compounds; vinyl ethers; vinyl carbazoles; styrene derivatives; alfa-methylstyrene derivatives; monomers having a cationically polymerizable vinyl linkage such as vinyl alcohol esters such as esters between vinyl alcohol and acrylic acid, methacrylic acid; and oligmers obtained by polymerizing the monomer, etc.

More specifically, the following compounds can be employed.

For example, it is possible to employ alicyclic epoxy compounds such as Celloxide 2021, Celloxide 2021A, Celloxide 2021P, Celloxide 2081, Celloxide 2000 and Celloxide 3000 (DAICEL chemical Industries Ltd.); (metha)acrylate compounds having epoxy group, such as Cyclomer A200 and Cyclomer M100; methacrylate having methylglycidyl group such as MGMA; glycidol representing a low molecular epoxy compound; β-methylepichlorohydrin; α-pinene oxide; α-olefin monoepoxide having 12 to 14 carbon atoms; α-olefin monoepoxide having 16 to 18 carbon atoms; epoxidized soy bean oil such as Dimac S-300K; epoxidized linseed oil such as Dimac L-500; and polyfunctional epoxy compounds such as Epolead GT301 and Epolead GT401.

It is also possible to employ alicyclic epoxy compounds (such as Cylacure; Dow Chemical Co., Ltd, U.S.); low molecular weight phenol compounds which are hydrogenated and aliphatized with terminal hydroxyl group thereof being substituted by a group having epoxy; and glycidyl esters of hexahydrophthalic acid or hydrogenated aromatic polyhydric carboxylic acid. Further, to improve the chemical resistance of the printed image, the ink may includes, for example, epoxidized polybutadiene such as Epolead PB3600 and PB3600M (trademark, DAICEL Chemical Industries., Ltd.); or transparent liquid epoxy resins excellent in weathering resistance and high in Tg such as EHPE3150 and EHPE3150CE (trademark, DAICEL Chemical Industries., Ltd.). In addition to these epoxy resins, it is also possible to incorporate lactone-modified alicyclic epoxy resin, examples of which including Placcell GL61, GL62, G101, G102, G105, G401,

G402, G403X, etc.

When it is desired to lower the viscosity of ink in addition to the enhancement of the curing rate of ink layer, it is preferable to further incorporate a vinyl ether compound into ink. Namely, when a vinyl ether compound is incorporated into ink, the curing rate of ink can be enhanced without extremely increasing the volatility of ink and at the same time, the viscosity of ink can be lowered.

As for such a vinyl ether compound, it is possible to employ compounds having a vinyl group which is bonded, through ether linkage, to (p+1)-valent group including benzene ring, naphthalene ring and biphenyl ring; or to (p+1)-valent group to be derived from cycloalkane skeleton, norbornane skeleton, adamantane skeleton, tricyclodecane skeleton, tetracyclododecane skeleton, terpenoid skeleton, and cholesterol skeleton. More specifically, it is possible to employ polyvinyl-etherified compounds of cyclohexane, norbornane, tricyclodecane, adamantine, benzene or naphthalene.

In order to prevent ink from being damaged in terms of the solvent resistance and photosensitivity thereof, the content of the aforementioned additives should preferably be limited at most to 10% by weight based on the total weight of the acid polymerizable solvent.

Further, as long as the solvent resistance, viscosity and photosensitivity of ink can be prevented from being damaged, the following compounds may be incorporated into the ink. Namely, the ink may further contain a homopolymer or copolymer of vinyl alcohol; acid-reactive/dehydrocondensing resins having OH group, COOH group, acetal group, etc. the molecular weight thereof being 5000 or less such as casein and cellulose; polycarbonate resins having a molecular weight of 5000 or less; copolymers to be derived from a reaction between polyamic acid, polyamino acid or acrylic acid and a vinyl compound having an acid polymerizable double bond on its side chain; copolymers to be derived from a reaction between vinyl alcohol and a vinyl compound having an acid polymerizable double bond on its side chain; and methylol melamine resin.

When these compounds are included in ink, it becomes possible to provide an ink layer with flexibility and resolubility or to enhance the curing properties of the ink layer.

The ink for ink jet recording according to the embodiments of the present invention may further contain a radically polymerizable compound. The employment of a radically polymerizable compound is effective in minimizing, if any, the influence of strong basicity of printing surface or the influence of acids, if any, on the pigment or on the printing surface. Examples of such radically polymerizable compounds include, for example, an acrylic monomer, a methacrylic monomer, a styrene monomer, and a compound having a plurality of vinyl-based polymerizable groups of these monomers. Among them, CEL2000 (trademark, DAICEL Chemical Industries., Ltd.); glycidyl methacrylate; and a compound provided with radically polymerizable as well as cationically polymerizable properties such as ester compounds to be derived from vinyl alcohols and acrylic acid, methacrylic acid, etc. are advantageous in the respects that these compounds can be polymerized not only radically but also cationically. In this case, a photoradical polymerization initiator such as Michler's ketone known as Irgacure (trade mark) and benzophenone, or a photocrosslinking type radical generating agent such as bisazide can be incorporated into the ink together with the aforementioned radically polymerizable compounds. This technique may be employed also in a case where the ink layer is required to have excellent chemical resistance after the curing thereof.

In the preparation of the ink for ink jet recording according to the embodiments of the present invention, it is generally desired that it is prepared so as not to contain any volatile component such as water and organic solvents. However, organic solvents to be employed in the preparation of raw materials, such as methylethyl ketone, propylene glycol-based solvents and ethyl lactate may be contained therein in an unavoidable quantity. Further, if the ink jet recording apparatus is provided with a gas exhausting mechanism or a solvent recovery mechanism for instance, a small quantity of organic solvents may be contained in the solution for the purpose of obtaining desired printed matters. In this case, it is preferable, in safety viewpoint, to employ water, alcohols such as ethanol, propanol or petroleum components such as isoper and terpene.

As already explained above, the image-forming performance of the ink for ink jet recording according to the embodiments of the present invention depends largely on the chemically amplification mechanism. Namely, an acid generates from a photo-acid generating agent due to the irradiation of light thereto, and the acid thus generated is diffused due to the heating thereof, thus enabling the acid to function as a catalyst for the crosslinking reaction or for the decomposition reaction. Therefore, in the case of this recording ink of chemically amplification type, the presence of basic ions would become a cause for deteriorating the sensitivity of the ink. Therefore, attention should be paid so that the recording ink can be prevented from being contaminated by a large quantity of basic ions not only in the process of preparing the recording ink but also in the process of manufacturing each of the constituent components.

In order to enhance the stability in viscosity of ink, the ink for ink jet recording according to the embodiments of the present invention should preferably contain, as a viscosity stabilizing agent, a basic compound and/or a basicity-adjusting compound. If carbon black is employed as a color component, the effect of these viscosity stabilizing agents would be further promoted. Moreover, since the basic compound is capable of concurrently effectively protecting not only the interior of the ink jet head of recording apparatus but also the metal portions of the piping for the ink from being eroded by acids, the employment of the basic compound is preferable in any kinds of the inks for ink jet recording

according to the embodiments of the present invention.

As for the basic compound, it is possible to employ any kind of inorganic basic materials and organic basic materials which are capable of being dissolved in a solvent to be polymerized in the presence of an acid. However, in view of solubility, the employment of organic basic materials is more preferable. Specific examples of such organic basic materials include ammonia compound, ammonium compounds, substituted or unsubstituted alkylamine, substituted or unsubstituted arylamine, pyridine, pyrimidine, and organic amines having a hetrocyclic skeleton such as imidazole. More specific examples of such organic basic materials include n-hexyl amine, dodecyl amine, aniline, dimethyl aniline, diphenyl amine, triphenyl amine, diazabicyclooctane, diazabicycloundecane, 3-phenyl pyridine, 4-phenyl pyridine, lutidine, 2,6-di-t-butylpyridine, and sulfonyl hydrazides such as 4-methylbenzene sulfonyl hydrazide, 4,4'-oxybis(benzenesulfonyl hydrazide) and 1,3-benzenesulfonyl hydrazide. Ammonium compounds can be also employed as a basic compound. These basic compounds can be employed singly or in combination of two or more kinds.

However, if a basic compound which is very strong in basicity such as imidazole is employed in this case, polymerization with time may be caused to occur or otherwise, a side reaction such as decomposition of photo-acid generating agent may be likely to take place. On the other hand, if a basic compound which is very weak in basicity is employed in this case, it would become difficult to sufficiently secure the effect of stabilizing the viscosity of ink through the addition of the basic compound. For example, the base dissociation constant pKb of the basic compound at a temperature of 25°C and under the condition where the basic compound is in a state of suitable aqueous solution should preferably be 4 or more. However, if this pKb is higher than 11 in a basic compound, such a compound would be incapable of exhibiting the effect of stabilizing the viscosity of ink. Examples of basic compounds which are capable of satisfying the aforementioned conditions are pyridine derivatives, aniline derivatives, aminonaphthalene derivatives, other kinds of nitrogen-containing heterocyclic compounds and the derivatives thereof.

Specific examples of the pyridine derivatives include 2-fluoropyridine, 3-fluoropyridine, 2-chloropyridine, 3-chloropyridine, 3-phenylpyridine, 2-benzylpyridine, 2-formylpyridine, 2-(2'-pyridyl) pyridine, 3-acetylpyridine, 2-bromopyridine, 3-bromopyridine, 2-iodopyridine, 3-iodopyridine, and 2,6-di-tert-butylpyridine.

Specific examples of the aniline derivatives include aniline, 4-(p-aminobenzoyl) aniline, 4-benzylaniline, 4-chloro-N,N-dimethylaniline, 3-5-dibromoaniline, 2,4-dichloroaniline, N,N-dimethylaniline, N,N-dimethyl-3-nitroaniline, N-ethylaniline, 2-fluoroaniline, 3-fluoroaniline, 4-fluoroaniline, 2-iodoaniline, N-methylaniline, 4-methylthioaniline, 2-bromoaniline, 3-bromoaniline, 4-bromoaniline, 4-bromo-N,N-dimethylaniline, 2-chloroaniline, 3-chloroaniline, 4-chloroaniline, 3-chloro-N,N-dimethylaniniline, 3-nitroaniline, 4-nitroaniline, 2-methoxyaniline, 3-methoxyaniline, diphenylamine, 2-biphenylamine, o-toluidine, m-toluidine, p-toluidine, 3,3'-diaminodiphenyl sulfone, 4,4'-diaminodiphenyl sulfone, and 4,4'-bis(4-aminophenoxy) diphenyl sulfone.

Specific examples of the aminonaphthalene derivatives include, for example, 1-amino-6-hydroxynaphthalene, 1-naphthylamine, 2-naphthylamine, diethylaminonaphthalene, and N-methyl-1-naphthylamine.

Specific examples of other kinds of nitrogen-containing heterocyclic compounds and the derivatives thereof include, for example, cinnoline, 3-acetylpiperidine, pyrazine, 2-methylpyrazine, methylaminopyrazine, pyridazine, 2-aminopyrimidine, 2-amino-4,6-dimethylpyrimidine, 2-amino-5-nitropyrimidine, 2,4,6-triamino-1,3,5-triazine, pyrrol, pyrazole, 1-methylpyrazole, 1,2,4-triazole, indazole, benzotriazole, quinazoline, quinoline, 3-aminoquinoline, 3-bromoquinoline, 8-carboxyquinoline, 3-hydroxyquinoline, 6-methoxyquinoline, 5-methylquinoline, quinoxaline, thiazole, 2-aminothiazole, 3,4-diazaindole, purine, 8-azapurine, indole and indolizine.

Among them, the employment of aniline derivatives as the aforementioned basic compound is especially preferable in terms of viscosity stability, volatility, basicity and low side-reaction.

However, since the aforementioned aniline compounds are relatively low basicity, the employment thereof in combination with a monomer having oxetane group and generally exhibiting basicity per se is not preferable. It is preferable to select, from oxetane compounds, a compound exhibiting such a high basicity that the pKb thereof at 25°C is confined within the range of 3 to 7. For example, basic compounds such as amine having an aliphatic skeleton or amine having an alicyclic skeleton can be suitably employed.

The ink according to the embodiments of the present invention is heated subsequent to the exposure, the volatility of the basic compounds should preferably be as low as possible. More specifically, the boiling point of the basic compounds should preferably be 150°C or more, more preferably 180°C or more under the ordinary pressure.

In order to secure the viscosity stabilizing effect of ink without considerably sacrificing the sensitivity thereof, the content of the basic compounds or the basicity-adjusting compounds should preferably be confined within the range of 1 to 30mol% based on the total molar quantity of the photo-acid generating agent in the recording ink. More preferably, the content of the basic compounds or the basicity-adjusting compounds should be confined within the range of 2 to 15mol% based on the photo-acid generating agent.

The employment of the photosensitive basic compounds which can be decomposed by the irradiation of light or radiation is preferable, since the photosensitive basic compounds are capable of minimizing the deterioration of sensitivity that may be caused to occur concomitant with the addition of basic compounds. Preferable examples of such hotosensitive basic compounds include sulfonium compounds and iodonium compounds.

Especially preferable examples of such sulfonium compounds and iodonium compounds are triphenylsulfonium acetate, triphenyl sulfonium hydroxide, triphenyl sulfonium phenolate, tris-(4-methylphenyl) sulfonium hydroxide, tris-(4-methylphenyl) sulfonium acetate, tris-(4-methylphenyl) sulfonium phenolate, diphenyl iodonium hydroxide, diphenyl iodonium acetate, diphenyl iodonium phenolate, bis-(4-t-butylphenyl) iodonium hydroxide, bis-(4-t-butylphenyl) iodonium acetate, bis-(4-t-butylphenyl) iodonium phenolate, thiophenyl-substituted triphenylsulfonium acetate, and thiophenyl-substituted triphenylsulfonium hydroxide.

In addition to the aforementioned basic compounds, it is also possible to incorporate other kinds of basic compounds into the ink. Further, if onium salts are to be employed as a photo-acid generating agent, the photo-acid generating agent should preferably be selected from those which are similar in kinds to the basic compound. For example, if the photo-acid generating agent and the basic compound are both formed of sulfonium compounds or iodonium compounds, it would be possible to obtain excellent effects in terms of sensitivity and shelf life stability.

Next, the present invention will be further explained in detail with reference to specific examples. Incidentally, the following examples are not intended to limit the scope of the present invention within the technical idea of the present invention.

(Preparation of ink)

In the preparation of a black color component, carbon black was kneaded together with acrylic resin (a dispersing agent) at first to prepare a mixture, to which 200 ppm of a nonionic surfactant (Sumitomo 3M Co., Ltd.) was added to obtain the black color component.

As a photo-acid generating agent, a solution of propylene carbonate containing 50% by weight of sulfonium salt (Lamberty Co., Ltd.) was employed.

Specific compounds employed in the preparation of ink as aliphatic epoxides, oxetane ring-containing compounds and alicyclic epoxides are as follows.

Aliphatic epoxide:

SR-NPG (Sakamoto Yakuhin Co., Ltd.): neopentyl glycol diglycidyl ether;

Oxetane ring-containing compounds:

OXT-221 (Toa Gosei Co., Ltd.): di [1-ethyl(3-oxetanyl)]methyl ether (DOX);

OXT-121 (Toa Gosei Co., Ltd.), 1,4-bis{[(3-ethyl-3-oxetanyl)methoxy]methyl} benzene (XDO);

Alicyclic epoxides:

Celloxide 3000 (DAICEL chemical Industries Ltd.)

Celloxide 2021 (DAICEL chemical Industries Ltd.)

These components were mixed together according to the formulations shown in the following Tables 1 to 3 to obtain ink samples. Specifically, in the preparation of these ink samples, a color component, an oxetane ring-containing compound, aliphatic epoxide and alicyclic epoxide were mixed together according to each of the formulations and then subjected to dispersion treatment for 4 hours by using a paint shaker. Thereafter, a photo-acid generating agent was added to the dispersion and gently stirred until the photo-acid generating agent was completely dissolved. The resultant mixture was then subjected to pressure filtration by using a membrane filter having a pore diameter of 1$\mu$m to obtain ink samples for ink jet recording.

The numbers shown in the following Tables 1 to 3 represent mixing quantities (weight parts). As for the photo-acid generating agent, the content thereof is represented by the quality of the propylene carbonate solution. Therefore, the actual content of the photo-acid generating agent (sulfonium salt) corresponds to 1/2 of the numbers shown in these Tables.

Table 1

| No. 1 | Aliphatic epoxide | Oxtane ring-containing compound | | Alicyclic epoxy | |
|---|---|---|---|---|---|
| | SR-NPG | DOX | XDO | C3000 | C2021 |
| I-1 | 80 | 20 | | | |
| I-2 | 75 | 25 | | | |
| I-3 | 62 | 38 | | | |
| I-4 | 50 | 50 | | | |
| I-5 | 25 | 75 | | | |
| I-6 | 20 | 80 | | | |
| I-7 | 90 | | 10 | | |
| I-8 | 80 | | 20 | | |
| I-9 | 70 | | 30 | | |
| I-10 | 60 | | 40 | | |
| I-11 | 50 | | 50 | | |
| I-12 | 50 | 42 | | 8 | |
| I-13 | 50 | 40 | 10 | | |
| I-14 | | 50 | | | 50 |
| I-15 | | 50 | | 50 | |

In the samples (I-1) to (I-15) shown in Table 1 shown above, the content of the color components was all set to 5 parts by weight and the content of the photo-acid generating agent was all set to 8 parts by weight. The mixing ratios of SR-NPG representing the aliphatic epoxide compound neopentyl glycol diglycidyl ether, of DOX and XDO each representing an oxetane ring-containing compound, and of C3000 and C2021 each representing an alicyclic epoxide compound were varied to obtain various samples of ink for ink jet recording.

Table 2

| No. | Coloring component | Photo-acid generating agent | Aliphatic epoxide | Oxetane ring-containing compound |
|---|---|---|---|---|
| | | ESCURE | SR-NPG | XDO |
| II-1 | 5 | 5 | 75 | 25 |
| II-2 | 5 | 8 | 75 | 25 |
| II-3 | 5 | 11 | 75 | 25 |
| II-4 | 5 | 14 | 75 | 25 |
| II-5 | 5 | 5 | 50 | 50 |
| II-6 | 5 | 8 | 50 | 50 |
| II-7 | 5 | 11 | 50 | 50 |
| II-8 | 5 | 14 | 50 | 50 |
| II-9 | 5 | 5 | 25 | 75 |
| II-I0 | 5 | 8 | 25 | 75 |
| II-11 | 5 | 11 | 25 | 75 |
| II-12 | 5 | 14 | 25 | 75 |

The samples (II-1) to (II-12) shown in Table 2 shown above were prepared by changing the mixing ratios of

SR-NPG representing an aliphatic epoxide compound, and of DOX representing an oxetane ring-containing compound, and also by varying the content of the photo-acid generating agent (ESACURE).

Table 3

| No. | Coloring component | Photo-acid generating agent | Aliphatic epoxide | Oxetane ring-containing compound |
|---|---|---|---|---|
| | | EXCURE | SR-NPG | DOX |
| III-1 | 5 | 5 | 90 | 10 |
| III-2 | 5 | 8 | 90 | 10 |
| III-3 | 5 | 11 | 90 | 10 |
| III-4 | 5 | 14 | 90 | 10 |
| III-5 | 5 | 5 | 80 | 20 |
| III-6 | 5 | 8 | 80 | 20 |
| III-7 | 5 | 11 | 80 | 20 |
| III-8 | 5 | 14 | 80 | 20 |
| III-9 | 5 | 5 | 70 | 30 |
| III-10 | 5 | 8 | 70 | 30 |
| III-11 | 5 | 11 | 70 | 30 |
| III-12 | 5 | 14 | 70 | 30 |

The samples (III-1) to (III-12) shown in Table 3 shown above were prepared by changing the mixing ratios of SR-NPG representing an aliphatic epoxide compound, and of XDO representing an oxetane ring-containing compound, and also by varying the content of the photo-acid generating agent (ESACURE).

(Assessment of performance of ink)

The viscosity, shelf life, curability and solvent resistance of each of these inks were examined by the following procedures, the results being summarized in the following Tables 4 to 6.

Viscosity:

By using an E-type viscometer (Toki Sangyo Co., Ltd.), the viscosity thereof at a temperature of 25°C was measured. In the case of the ink for ink jet recording which is discharged from an ink jet head, if the viscosity of the ink is too high, it is required to provide the ink jet head with a discharging mechanism. As a result, the ink jet head is caused to increase in size or in power consumption. It may be conceivable to heat the ink jet head so as to lower the viscosity of the ink being discharged from the head. In this case however, it is required to provide the ink jet head with heating means. In view of these problems, it is desirable that the viscosity of the ink for ink jet recording should be not higher than 50 mPa·s at a temperature of 25°C.

Shelf life:

The samples of ink were subjected to an accelerated test under high temperature storage (60°C in storage temperature and 72 hours in storage time), thereby measuring the viscosity of ink before and after the storage. The viscosity of ink was measured by using an E-type viscometer (Toki Sangyo Co., Ltd.) at a temperature of 25°C. From the results measured of the viscosity of ink before and after the storage, the ratio (%) of increase in viscosity of ink after the storage was determined according to the following formula.

(Viscosity after storage-Viscosity before storage)/ Viscosity before storage × 100

The ratio of increase in viscosity of ink as measured according to the aforementioned accelerated test is required to be confined to not higher than 20%. In the case of cationic curing type UV ink, the polymerization reaction thereof is caused to initiate even during the storage thereof due to the acid that has been generated through the decomposition of photo-acid generating agent, thereby giving rise to an increase with time of the viscosity of ink. Since the rate of change in viscosity of ink is substantially proportional to the rate of change in volume of the droplet of ink that has been discharged, any increase in viscosity of ink leads to a decrease in volume of the droplet of ink. Therefore, if an image is formed by using such an ink that has been increased in viscosity due to the storage thereof, the intensity of image would be lowered as compared with that can be obtained using an ink where the viscosity thereof is not yet increased. Whereas, if the ratio of increase in viscosity of ink as measured according to the accelerated test is confined to not higher than 20%, the ratio of increase in viscosity of ink that has been stored for three months at a temperature of 25°C is assumed to be confined within +20%, so that such an ink is assumed as having a sufficient storage stability.

Curability:

By using an ink jet head and at a printing speed of 25 m/min, a solid image (intensity of image: 1.2-1.8) was formed on a PET film (100μm in thickness) employed as a recording medium. Subsequently, by using a UV lamp (Fusion Co., Ltd., D bulb, illuminance: about 2500 mW/cm$^2$), the solid image was irradiated with ultraviolet ray. Subsequently, the solid image was heated for one minute at a temperature of 100°C to obtain a cured film of ink. The resultant cured ink film was evaluated with respect to the pencil hardness thereof by scratch test (pencil test) (JIS K 5600-5-4). In this case, the pencil hardness of the ink film should preferably be F or more.

Solvent resistance:

According to the same procedures as described above, a cured film of ink was formed and the surface of the film was rubbed 10 times by using absorbent cotton impregnated with ethanol to examine the solvent resistance of the cured ink film. The residual ratio of the image after the test was visually evaluated and judged according to the following criterion. Incidentally, the residual area of image should preferably be 70% or more based on the original area of image.

| | |
|---|---|
| Less than 70% of original image: | point 0 |
| Not less than 70% of original image: | point 1 |
| Original image is substantially retained: | point 2 |

Table 4

| No. | Viscosity (mPa·s) | Shelf life accelerated test | Curability pencil hardness | Solvent resistance ethanol resistance |
|---|---|---|---|---|
| I-1 | 23.1 | 0.0 | F | 1 |
| I-2 | 22.6 | 0.0 | F | 2 |
| I-3 | 21.3 | 0.5 | F | 2 |
| I-4 | 20.3 | 6.7 | F | 2 |
| I-5 | 18.7 | 7.9 | H | 2 |
| I-6 | 17.5 | 21.2 | H | 2 |
| I-7 | 17.2 | 10.7 | F | 1 |
| I-8 | 28.3 | 10.9 | F | 1 |
| I-9 | 33.7 | 14.2 | F | 1 |
| I-10 | 49.0 | 18.0 | F | 1 |
| I-11 | 55.0 | 22.0 | H | 2 |
| I-12 | 18.1 | 15.1 | H | 1 |
| I-13 | 22.9 | 16.1 | H | 2 |
| I-14 | 42.3 | 8.7 | H | 2 |

(continued)

| No. | Viscosity (mPa·s) | Shelf life accelerated test | Curability pencil hardness | Solvent resistance ethanol resistance |
|---|---|---|---|---|
| I-15 | 13.2 | 51.4 | H | 0 |

Table 5

| No. | Viscosity (mPa·s) | Shelf life accelerated test | Curability pencil hardness | Solvent resistance ethanol resistance |
|---|---|---|---|---|
| II-1 | 21.0 | 0.0 | F | 2 |
| II-2 | 22.6 | 0.0 | F | 2 |
| II-3 | 23.5 | 2.1 | F | 2 |
| II-4 | 24.7 | 6.3 | H | 2 |
| II-5 | 19.7 | 0.0 | H | 2 |
| 1I-6 | 20.4 | 6.7 | H | 2 |
| II-7 | 21.3 | 11.2 | H | 2 |
| II-8 | 22.4 | 10.4 | H | 2 |
| II-9 | 17.4 | 7.8 | H | 2 |
| II-10 | 18.7 | 7.9 | H | 2 |
| 11-11 | 19.8 | 10.1 | H | 2 |
| II-12 | 18.8 | 17.9 | H | 2 |

Table 6

| No. | Viscosity (mPa·s) | Shelf life accelerated test | Curability pencil hardness | Solvent resistance ethanol resistance |
|---|---|---|---|---|
| III-1 | 7.0 | 8.1 | F | 1 |
| III-2 | 17.2 | 10.7 | F | 1 |
| III-3 | 17.7 | 15.9 | F | 1 |
| III-4 | 18.0 | 17.0 | F | 1 |
| III-5 | 27.9 | 8.9 | F | 1 |
| III-6 | 28.3 | 10.9 | F | 1 |
| III-7 | 29.0 | 15.0 | F | 1 |
| III-8 | 28.9 | 12.8 | H | 2 |
| III-9 | 31.7 | 11.6 | F | 1 |
| III-10 | 33.7 | 14.2 | F | 1 |
| III-11 | 33.4 | 16.4 | H | 2 |
| III-12 | 35.1 | 18.5 | H | 2 |

As shown in Table 4, all of the samples (I-1) to (I-6) where the aliphatic epoxide compound (SR-NPG) and the oxetane ring-containing compound (DOX) were both incorporated into the ink were found to satisfy all of the properties including viscosity, shelf life, curability and solvent resistance. The sample (I-12) containing not larger than 10 parts by weight of alicyclic epoxy compound in addition to the aliphatic epoxide compound and the oxetane ring-containing compound also indicated almost the same effects as those of the samples (I-1) to (I-6).

If both of the aliphatic epoxide compound (SR-NPG) and the oxetane ring-containing compound (DOX) are to be incorporated into the ink, it would be possible to provide an ink satisfying all of the properties including viscosity, shelf life, curability and solvent resistance as long as the content of the aliphatic epoxide compound (SR-NPG) is confined within the range of 70 to 90% by weight (samples (I-7, I-8 and I-9)). It will be recognized from the results of the samples (I-10) and (I-11) that if the content of the aliphatic epoxide compound (SR-NPG) is less than 70% by weight, the viscosity of the ink would become too high so that it may become difficult to easily discharge the ink from the ink jet head.

As seen from the result of the sample (I-13), even if two kinds of oxetane ring-containing compounds (DOX) and (XDO) are jointly used, the effects to be obtained therefrom would be quite the same.

Further, if the ink is formulated such that an oxetane ring-containing compound and an alicyclic epoxide compound are incorporated but an aliphatic epoxide compound is not incorporated therein, it would be impossible to obtain an ink which is satisfactory in all of the properties including viscosity, shelf life, curability and solvent resistance. More specifically, when C2021 was employed as an alicyclic epoxide compound, the viscosity of the ink became too high to enable the ink to be discharged from the ink jet head (I-14). Further, when C3000 was employed as an alicyclic epoxide compound, the ratio of increase in viscosity of the ink became extremely high, thus rendering the ink insufficient in shelf life thereof (I-15).

It has been made clear from the results of Table 5 and Table 6 that as long as the content of the photo-acid generating agent (ESACURE) is confined within the range of 5 to 14% by weight, it is possible to obtain an ink which is satisfactory in all of the properties including viscosity, shelf life, curability and solvent resistance irrespective of the kinds of oxetane ring-containing compound to be incorporated therein.

According to one embodiment of the present invention, it is possible to provide an ink for ink jet recording, which is low in viscosity and excellent in storage stability as well as in curability, and at the same time, is capable of forming an image excellent in solvent resistance.

## Claims

1. An ink for ink jet recording comprising:

   - a photo-acid generating agent which is capable of generating an acid as it is irradiated with light;
   - a colorant; and
   - an acid-polymerizable solvent which can be polymerized in the presence of an acid;

   and is **characterized in that** a content of said photo-acid generating agent is not less than 2,5 parts by weight per 100 parts by weight of said acid-polymerizable solvent; and said acid-polymerizable solvent comprises neopentyl glycol diglycidyl ether and an oxetane ring-containing compound represented by the following chemical formula (2):

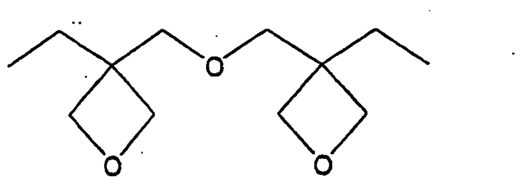

(2)

2. The ink according to claim 1, **characterized in that** said photo-acid generating agent is an onium salt, said colorant component is a pigment, the content of the neopentyl glycol diglycidyl ether in said acid polymerizable solvent is confined within the range of 25% by weight to 75% by weight, and the content of the oxetane ring-containing compound represented by the general formula (2) in said acid polymerizable solvent is confined within the range of 25% by weight to 75% by weight.

3. The ink according to claim 1, **characterized in that** said photo-acid generating agent comprises onium salts represented by the following general formulas (4) and (5) or triazine halide compounds:

R6 - $C1^{+}$ - R7
|
R8 $nA4^{-}$ ... (4)

$$R9 - C2^{+} - R10\ mA5^{-} \quad (5)$$

wherein R6, R7, R8, R9 and R10 individually represents either aromatic group or functional group having a chalcogenide atom and aromatic group; C1 and C2 individually represents an aromatic group and a chalcogenide atom; A4 and A5 individually represents anion species selected from the group consisting of $PF_6^-$, $SbF_6^-$, $BF_4^-$, $AsF_6^-$, $CF_3SO_3^-$, $C_4F_9SO_3^-$ and $CH_3SO_3^-$; and m and n individually represents an integer.

4. The ink according to claim 1, **characterized in that** the mixing ratio of said photo-acid generating agent is confined within the range of 1 to 20 parts by weight per 100 parts by weight of the acid-polymerizable solvent.

5. The ink according to claim 1, **characterized in that** the content of said colorant components in the ink is confined within the range of 1 to 25% by weight.

6. An ink for ink jet recording comprising:

- a photo-acid generating agent which is capable of generating an acid as it is irradiated with light;
- a colorant; and
- an acid-polymerizable solvent which can be polymerized in the presence of an acid;

and is **characterized in that** a content of said photo-acid generating agent is not less than 2,5 parts by weight per 100 parts by weight of said acid-polymerizable solvent; and said acid-polymerizable solvent comprises 70% by weight to 90% by weight of neopentyl glycol diglycidyl ether and 10% by weight to 30% by weight of an oxetane ring-containing compound represented by the following chemical formula (3):

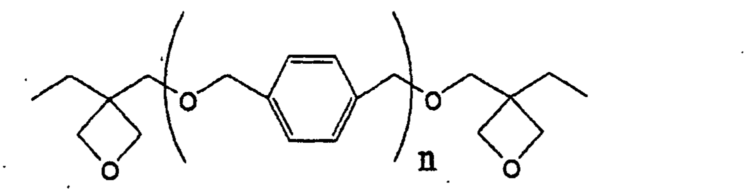

(3)

wherein n represents an integer ranging from 1 to 3.

7. The ink according to claim 6, **characterized in that** said photo-acid generating agent is an onium salt, and said colorant component is a pigment.

8. The ink according to claim 6, **characterized in that** said photo-acid generating agent comprises onium salts represented by the following general formulas (4) and (5) or triazine halide compounds:

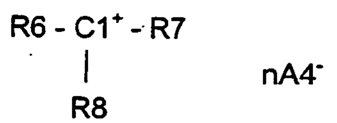

··· (4)

$$R9 - C2^{+} - R10\ mA5^{-} \quad (5)$$

wherein R6, R7, R8 and R10 individually represents either aromatic group or functional group having a chalcogenide atom and an aromatic group; C1 and C2 indicidually represents an aromatic group and a chalcogenide atom; A4 and A5 individually represents anion species selected from the group consisting of $PF_6^-$, $SbF_6^-$, $BF_4^-$, $AsF_6^-$, $CF_3SO_3^-$, $C_4F_9SO_3^-$, and $CH_3SO_3^-$ ; and m and n individually represents an integer.

9. The ink according to claim 6, **characterized in that** the mixing ratio of said photo-acid generating agent is confined within the range of 1 to 20 parts by weight per100 parts by weight of the acid-polymerizable solvent.

**10.** The ink according to claim 6, **characterized in that** the content of said colorant components in the ink is confined within the range of 1 to 25% by weight.

## Patentansprüche

**1.** Tinte für Tintenstrahldruck, mit:

- einem Photosäuregenerator, der dazu geeignet ist, eine Säure zu erzeugen, wenn er mit Licht bestrahlt wird;
- einer Farbstoffkomponente; und
- einem säurepolymerisierbaren Lösungsmittel, das bei Anwesenheit einer Säure polymerisierbar ist;

**dadurch gekennzeichnet, dass**
der Anteil des Photosäuregenerators nicht kleiner ist als 2,5 Gewichtsteile pro 100 Gewichtsteile des säurepolymerisierbaren Lösungsmittels; und
das säurepolymerisierbare Lösungsmittel Neopentylglycoldiglycidylether und eine Oxetanringhaltige Verbindung enthält, die durch folgende chemische Formel (2) dargestellt wird:

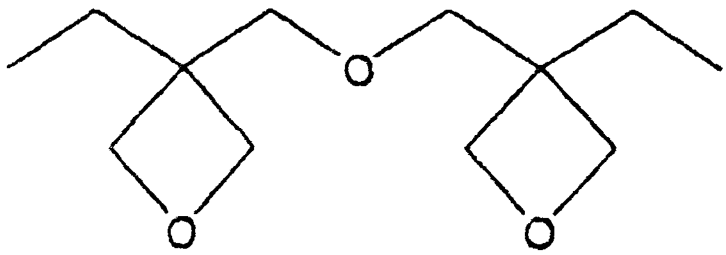

(2)

**2.** Tinte nach Anspruch 1, **dadurch gekennzeichnet, dass**
der Photosäuregenerator ein Oniumsalz ist, die Farbstoffkomponente ein Pigment ist, der Anteil des Neopentylglycoldiglycidylethers im säurepolymerisierbaren Lösungsmittel 25 Gew.-% bis 75 Gew.-% beträgt, und der Anteil der durch die allgemeine Formel (2) dargestellten, Oxetanringhaltigen Verbindung im säurepolymerisierbaren Lösungsmittel auf 25 Gew.-% bis 75 Gew.-% begrenzt ist.

**3.** Tinte nach Anspruch 1, **dadurch gekennzeichnet, dass** der Photosäuregenerator Oniumsalze, die durch die folgenden allgemeinen Formeln (4) und 5 dargestellt werden, oder Triazin-Halogenidverbindungen enthält:

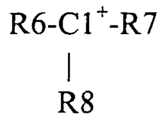

$nA4^-$ (4)

$R9\text{-}C2^+\text{-}R10\ mA5^-$ (5)

wobei **R6, R7, R8, R9** und **R10** jeweils entweder eine aromatische Gruppe oder eine funktionelle Gruppe mit einem Chalcogenidatom und einer aromatischen Gruppe; C1 und C2 jeweils eine aromatische Gruppe und ein Chalcogenidatom; **A4** und **A5** jeweils eine aus $PF_6^-$, $SbF_6^-$, $BF_4^-$, $AsF_6^-$, $CF_3SO_3^-$, $C_4F_9SO_3^-$ und $CH_3SO_3^-$ ausgewählte Anionenart und m und n jeweils eine ganze Zahl darstellen.

**4.** Tinte nach Anspruch 1, **dadurch gekennzeichnet, dass** das Mischungsverhältnis des Photosäuregenerators auf 1 bis 20 Gewichtsteile pro 100 Gewichtsteile des säurepolymerisierbaren Lösungsmittels begrenzt ist.

**5.** Tinte nach Anspruch 1, **dadurch gekennzeichnet, dass** der Anteil der Farbstoffkomponenten in der Tinte auf 1 bis 25 Gew.-% begrenzt ist.

**6.** Tinte für Tintenstrahldruck, mit:

- einem Photosäuregenerator, der dazu geeignet ist, eine Säure zu erzeugen, wenn er mit Licht bestrahlt wird;
- einer Farbstoffkomponente; und
- einem säure-polymerisierbaren Lösungsmittel, das bei Anwesenheit einer Säure polymerisierbar ist;

**dadurch gekennzeichnet, dass**
der Anteil des Photosäuregenerators nicht kleiner ist als 2,5 Gewichtsteile pro 100 Gewichtsteile des säurepolymerisierbaren Lösungsmittels; und
das säurepolymerisierbare Lösungsmittel 70 Gew.-% bis 90 Gew.-% Neopentylglycoldiglycidylether und 10 Gew.-% bis 30 Gew.-% einer Oxetanringhaltigen Verbindung enthält, die durch folgende chemische Formel (3) dargestellt wird:

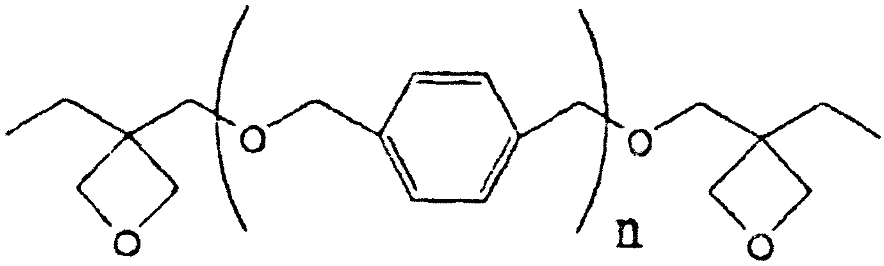

(3)

wobei n eine ganze Zahl im Bereich von 1 bis 3 darstellt.

**7.** Tinte nach Anspruch 6, **dadurch gekennzeichnet, dass** der Photosäuregenerator ein Oniumsalz und die Farbstoffkomponente ein Pigment ist.

**8.** Tinte nach Anspruch 6, **dadurch gekennzeichnet, dass** der Photosäuregenerator Oniumsalze, die durch die folgenden folgenden allgemeinen Formeln (4) und (5) dargestellt werden, oder Triazin-Halogenidverbindungen enthält:

$$\begin{array}{l} R6\text{-}C1^{+}\text{-}R7 \\ \quad | \\ \quad R8 \end{array} \qquad nA4^{-} \qquad (4)$$

$$R9\text{-}C2^{+}\text{-}R10\ m\text{-}A5^{-} \qquad (5)$$

wobei **R6, R7, R8, R9** und **R10** jeweils entweder eine aromatische Gruppe oder eine funktionelle Gruppe mit einem Chalcogenidatom und einer aromatischen Gruppe; **C1** und **C2** jeweils eine aromatische Gruppe und ein Chalcogenidatom; **A4** und **A5** jeweils eine aus $PF_6^-$, $SbF_6^-$,$BF_4^-$, $AsF_6^-$, $CF_3SO_3^-$, $C_4F_9SO_3^-$ und $CH_3SO_3^-$ ausgewählte Anionenart und m und **n** jeweils eine ganze Zahl darstellen.

**9.** Tinte nach Anspruch 6, **dadurch gekennzeichnet, dass** das Mischverhältnis des Photosäuregenerators auf 1 bis 20 Gewichtsteile pro 100 Gewichtsteile des säurepolymerisierbaren Lösungsmittels begrenzt ist.

**10.** Tinte nach Anspruch 6, **dadurch gekennzeichnet, dass** der Anteil der Farbstoffkomponenten in der Tinte auf 1 bis 25 Gew.-% begrenzt ist.

## Revendications

**1.** Encre pour enregistrement à jet d'encre comprenant :

- un agent générant un photoacide qui est capable de générer un acide lorsqu'il est irradié avec de la lumière;
- un colorant ; et
- un solvant polymérisable à l'acide qui peut être polymérisé en présence d'un acide ;

et est **caractérisée en ce qu'**une teneur dudit agent générant un photoacide n'est pas inférieure à 2,5 parties en poids pour 100 parties en poids dudit solvant polymérisable à l'acide ; et ledit solvant polymérisable à l'acide comprend du néopentyl glycol diglycidyl éther et un composé contenant un cycle oxétane représenté par la formule chimique (2) suivante :

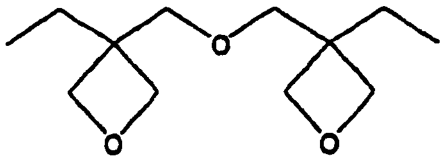

**(2)**

**2.** Encre selon la revendication 1, **caractérisée en ce que** ledit agent générant un photoacide est un sel d'onium, ledit composant colorant est un pigment, la teneur du néopentyl glycol diglycidyl éther dans ledit solvant polymérisable à l'acide est confiné dans la plage de 25 % en poids à 75 % en poids et la teneur du composé contenant un cycle oxétane représenté par la formule générale (2) dans ledit solvant polymérisable à l'acide est confinée dans la plage de 25 % en poids à 75 % en poids.

**3.** Encre selon la revendication 1, **caractérisée en ce que** ledit agent générant un photoacide comprend des sels d'onium représentés par les formules générales (4) et (5) suivantes ou des composés d'halogénure de triazine :

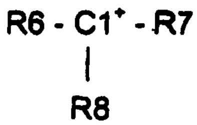

$nA4^-$ ··· **(4)**

$R9 - C2^+ - R10 \; mA5^-$ (5)

où R6, R7, R8, R9 et R10 représentent individuellement soit un groupe aromatique, soit un groupe fonctionnel ayant un atome de chalcogénure et un groupe aromatique ; C1 et C2 représentent individuellement un groupe aromatique et un atome de chalcogénure ; A4 et A5 représentent individuellement une espèce d'anion choisie dans le groupe constitué par $PF_6^-$, $SbF_6^-$, $AsF_6^-$, $CF_3SO_3^-$, $C_4F_9SO_3^-$ et $CH_3SO_3^-$ ; et m et n représentent individuellement un entier.

**4.** Encre selon la revendication 1, **caractérisée en ce que** le rapport de mélange dudit agent générant un photoacide est confiné dans la plage de 1 à 20 parties en poids pour 100 parties en poids du solvant polymérisable à l'acide.

**5.** Encre selon la revendication 1, **caractérisée en ce que** la teneur desdits composants colorants dans l'encre est confinée dans la plage de 1 à 25 % en poids.

**6.** Encre pour enregistrement à jet d'encre comprenant:

- un agent générant un photoacide qui est capable de générer un acide lorsqu'il est irradié avec de la lumière;
- un colorant ; et
- un solvant polymérisable à l'acide qui peut être polymérisé en présence d'un acide ;

et est **caractérisée en ce qu'**une teneur dudit agent générant un photoacide n'est pas inférieure à 2,5 parties en poids pour 100 parties en poids dudit solvant polymérisable à l'acide ; et ledit solvant polymérisable à l'acide comprend 70 % en poids à 90 % en poids de néopentyl glycol diglycidyl éther et 10 % en poids à 30 % en poids d'un composé contenant un cycle oxétane représenté par la formule chimique (3) suivante :

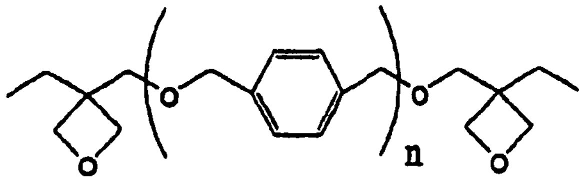

(3)

où n représente un entier allant de 1 à 3.

**7.** Encre selon la revendication 6, **caractérisée en ce que** ledit agent générant un photoacide est un sel d'onium et ledit composant colorant est un pigment.

**8.** Encre selon la revendication 6, **caractérisée en ce que** ledit agent générant un photoacide comprend des sels d'onium représentés par les formules générales (4) et (5) suivantes ou des composés d'halogénure de triazine :

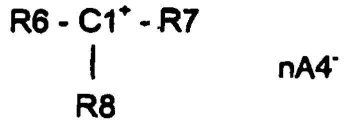

··· (4)

R9 - $C2^{+}$- R10 $mA5^{-}$ (5)

où R6, R7, R8 et R10 représentent individuellement soit un groupe aromatique, soit un groupe fonctionnel ayant un atome de chalcogénure et un groupe aromatique ; C1 et C2 représentent individuellement un groupe aromatique et un atome de chalcogénure ; A4 et A5 représentent individuellement une espèce d'anion choisie dans le groupe constitué par $PF_6^-$, $SbF_6^-$, $AsF_6^-$, $CF_3SO_3^-$, $C_4F_9SO_3^-$ et $CH_3SO_3^-$; et m et n représentent individuellement un entier.

**9.** Encre selon la revendication 6, **caractérisée en ce que** le rapport de mélange dudit agent générant un photoacide est confiné dans la plage de 1 à 20 parties en poids pour 100 parties en poids du solvant polymérisable à l'acide.

**10.** Encre selon la revendication 6, **caractérisée en ce que** la teneur desdits composants colorants dans l'encre est confinée dans la plage de 1 à 25 % en poids.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 8143806 A
- JP 2003119414 A
- JP 2003 A
- JP 251798 A
- JP 2001 A
- JP 220526 A
- US 6322892 B1
- US 20030202079 A1
- US 3515552 A
- US 3536489 A
- US 3779778 A
- DE 2243621
- US 3987037 A


### Non-patent literature cited in the description


- **CRIVELLO et al.** Synthesis and Photoactivity of Novel 5-Arylthianthrenium Salt Cationic Photoinitiators. *J. Polym. Sci. Part A: Polym. Chem,* 2002, vol. 40, 3465-3480
- **JANG ; CRIVELLO.** Synthesis and Cationic Photopolymerization of Epoxi-Functional Monomers and Oligomers. *J. Polym. Sci. Part A: Polym. Chem,* 2003, vol. 41, 3056-3073